# EUROPEAN PATENT APPLICATION

(11) **EP 0 992 575 A1**
(43) Date of publication of application: **12.04.2000**
(21) Application number: 98850156.5
(22) Date of filing: 09.10.1998
(51) Int. Cl.: C11D 3/39, C11D 3/08, C01B 15/10, C11D 3/20, C11D 3/386

(54) **Bleaching agent**

(71) Applicant: AKZO NOBEL N.V., 6800 SB Arnhem (NL)
(72) Inventor: Jigstam, Monika, 423 41 Torslanda (SE); Lagnemo, Hans, 417 28 Göteborg (SE)
(74) Representative: Jönsson, Christer

(57) **Abstract**

The invention relates to alkali metal percarbonate particles having a content of active oxygen from 10 to about 15.3 wt% and comprising alkali metal silicate having a molar ratio SiO₂:M₂O, M being an alkali metal, exceeding 3 but not exceeding 5. The invention also relates to its preparation and use as well as a composition containing of such particles.

## Description

The present invention relates to particles of alkali metal percarbonate, preparation and use thereof, and a composition containing such particles.

Alkali metal percarbonate (alkali metal carbonate peroxy hydrate) is an effective and environmental friendly bleaching agent particularly useful for detergent compositions. In order to avoid decomposition during storage it is common to mix or coat percarbonate for commercial use with inorganic and/or organic stabilisers. Such percarbonate is described in, for example, WO 95/18065, WO 96/11252, WO 95/18065 and US 5714201.

Modern detergent compositions normally contains enzymes. However, it has been found that percarbonate bleach affects the activity of the enzymes negatively. This is believed to be due to the fact that the percarbonate dissolves rapidly also in rather cold washing water to form hydrogen peroxide which inactivates the enzymes. A solution to this problem is to provide percarbonate particles with a coating having such a low dissolution rate that the concentration of hydrogen peroxide in the washing water does not reach significant levels until the enzymes already have acted. However, it is difficult to provide percarbonate with a suitable dissolution rate also having a high content of active oxygen and preferably also a high storage stability. According to the invention, this problem has been solved by including in the percarbonate particles an alkali metal silicate having a molar ratio SiO₂:M₂O (M being an alkali metal) exceeding 3.

Thus, the invention concerns alkali metal percarbonate particles having a content of active oxygen from 10 to about 15.3 wt%, preferably from 12 to about 15.3 wt%, most preferably from 13 to about 15.3 wt%, particularly most preferably from 14 to about 15.3 wt%. The particles further comprise alkali metal silicate having a molar ratio SiO₂:M₂O exceeding 3, preferably exceeding 3.2, but suitably not exceeding 5, preferably not exceeding 4. The alkali metal silicate can be present in a coating and/or be substantially uniformly mixed with the alkali metal percarbonate within the particles, for example by being added at a granulation step or at the preparation of the percarbonate from hydrogen peroxide and alkali metal carbonate.

The alkali metal in the silicate is preferably sodium, potassium or mixtures thereof, most preferably sodium.

The particles suitably contains from about 0.5 to about 30 wt%, preferably from about 3 to about 20 wt%, most preferably from about 5 to about 12 wt% of alkali metal silicate, expressed as sodium silicate, having a molar ratio SiO₂:M₂O exceeding 3. Most preferably, the particles have a coating containing alkali metal silicate with a molar ratio SiO₂:M₂O exceeding 3, suitably constituting from about 1 to about 25 wt%, preferably from about 5 to about 11 wt% of the total particle.

Good storage stability of alkali metal percarbonate can be obtained by certain water soluble organic stabilisers, but they also give a high dissolution rate. It has now been found that if such organic stabilisers are combined with alkali metal silicate having a molar ratio SiO₂:M₂O exceeding 3 particles with a sufficiently low dissolution rate can be obtained, particularly if the organic stabiliser and the silicate are added separately instead of being pre-mixed before addition. Water soluble organic stabilisers can be present in a coating and/or be substantially uniformly mixed with the alkali metal percarbonate within the particles, for example by being added at a granulation step or at the preparation of the percarbonate from hydrogen peroxide and alkali metal carbonate.

Suitable organic stabilisers are selected from aliphatic compounds comprising one or more carboxylic acid groups and/or ore or more hydroxy groups, or salts thereof. Preferred organic compounds are of the formula

R₁ (CₙHₘ(OH)ₚ(COOH)_{q}) R₂

in which n = 1-8, m = 1-2n, p = 0-n, q = 0-2 and preferably at least one of R₁ and R₂ is COOH and the other one is OH or COOH; or salts thereof. CₙHₘ is preferably a straight chain but may also be branched.

One particularly preferred group of organic stabilisers are hydroxy carboxylic acids of the formula

R'CₙHₘ(OH)ₙCOOH

in which R' is CH₂OH or COOH, n is 2-6, and m is 0-n; or salts thereof.

Preferably R' in the above formula is CH₂OH. It is also preferred that n is 4 or 5. Preferably, m is equal to n or n-2, the carbon chain thus being saturated or containing one double bond. A particularly preferred hydroxy carboxylic acid is glucoheptonic acid (R' is CH₂OH, n and m are 5). Other preferred hydroxy carboxylic acids are gluconic acid (R' is CH₂OH, n and m are 4) and ascorbic acid (R' is CH₂OH, n is 4 and m is 2). Other useful hydroxy carboxylic acids include, for example, trihydroxy glutaric acid, tartaric acid or saccharic acid.

Another particularly preferred group of organic stabilisers are dicarboxylic acids or salts thereof suitably having from 5 to 10 carbon atoms, preferably from 5 to 8 carbon atoms, most preferably from 5 to 7 carbon atoms. Preferably, the carboxylic acid groups are located at the ends of the carbon chain. Further, the dicarboxylic acid preferably does not comprise any hydroxyl groups and most preferably it does not comprise any functional groups except the carboxylic acid groups.

Preferred dicarboxylic acids are of the formula:

COOH - R - COOH

in which R is alkylene, which is preferred, or alkenylene, having from 3 to 8 carbon atoms, preferably from 3 to 5 carbon atoms. Most preferably, R is a straight chain without branches.

Examples of useful dicarboxylic acids are glutaric acid adipic acid, pimelic acid, suberic acid, azelaic acid, sebacic acid and mixtures thereof, of which glutaric acid, adipic acid and pimelic acid are particularly preferred. Glutaric acid is the most preferred acid.

Another preferred group of organic stabilisers are biodegradable amino acids such as β-alanine-N,N-diacetic acid, methylglycine N,N-diacetic acid, isoserine N,N-diacetic acid, serine N,N-diacetic acid, and salts thereof.

Other examples of useful organic stabilisers include the following compounds and salts thereof: 2-pentenedioic acid, 2-(3-carboxy-1-oxopropoxy)-3-hydroxy-butanedioic acid, carboxy methoxy succinic acid, glycerin monocitrate, 2,5-diethyl adipic acid, 3-tert-butyl-hexanedioic acid, oxydisuccinic acid, 2-butenedioxid acid, hydroxy-butanedioic acid, 2-ethylsuberic acid, dihydroxy tartaric acid, heptonic acid, oxalosuccinic acid, carboxy succinic acid, 3-oxo-glutaric acid, galactaric acid, dihydroxy-maleic acid, cork acid, aconitic acid, methylmaleic acid, 2-oxo-glutaric acid, oxalocitric acid, citric acid, isocitric acid, glycolic acid, diglycolic acid, fumaric acid, 2-butenedioic acid, succinic acid, methylene-succinic acid, 1,2,3- tricarboxy propane, 2-hydroxymethyl-crotonic acid, glyceric acid, hydroxy-pivalic acid, dimethylol-propionic acid, malonic acid, methyl-malonic acid, ethylene malonic acid, methylene malonic acid, (ethyleneoxy)di-malonic acid, hydracrylic acid, 2-methyl-hydracrylic acid, 3-hydroxy-propionic acid, hydroxy-pyruvic acid, (carboxymethyl) malonic acid, ethylmalonic acid, dimethyl malonic acid, 2-methyl malonic acid, hydroxy-malonic acid, ethylene lactic acid, mesoxalic acid, glycerolic acid, sorbic acid, 2-amino-1,1,2-ethane-tricarboxylic acid, aspartic acid, 2-(hydroxymethyl)-aspartic acid, aminomethyl propanedioic acid, serine, glycineserine, 2-methyl-serine, N-methyl-serine, 2-aminomalonic add, N-hydroxyimino diacetic acid, N-(carboxymethyl)maleamic acid, N-(carboxymethyl)glutamic acid, N-(carboxymethyl)aspartic add, N-(2-hydroxyethyl)sarcosine, iminodisuccinic acid, 3-bis(carboxymethyl)amino)propionic acid, N-(hydroxyethyl)glycine, N-ethyliminodiacetic acid, methyliminodiacetic acid, nitrilotris(propionic acid), 3,3'-iminodipropionic acid, diethanol glycine, diglycine, triglycine, ethanolamine-N,N-diacetic acid, glutamic acid and aspartic acid.

It is preferred to use an alkali metal or an alkaline earth metal salt of the organic compounds. Alkali metals are particularly preferred and may, for example, be selected from sodium, potassium or mixtures thereof, and alkaline earth metals are preferably selected from calcium, magnesium or mixtures thereof. Sodium salts are particularly preferred. Throughout the description of the invention, the term acid also refers to salts thereof.

The particles preferably contain from about 0.01 to about 15 wt%, most preferably from about 0.01 to about 10 wt%, particularly preferably from about 0.05 to about 5 wt% of one or more water soluble organic stabiliser as described above.

It has been found that the storage stability is further improved if the particles contain a water soluble magnesium compound, preferably magnesium sulfate. The magnesium compound may be mixed with the peroxy compound and/or be included in a coating. Preferably at least some of the magnesium is mixed with the peroxy compound, most preferably in combination with alkali metal silicate. The particles preferably contains from about 0.01 to about 5 wt%, most preferably from about 0.1 to about 3 wt% of magnesium compounds expressed as magnesium sulfate.

It is preferred if the particles do not contain organic compounds that are not easily degradable or for other reasons questionable from an environmental point of view. Examples of such undesired compounds are EDTA (ethylene diamine tetraacetic acid), DTPA (diethylene triamine pentaacetic acid), phosphonic acids and salts thereof. It is also preferred to avoid boron containing compounds such as boric acid, borates or complexes thereof with organic compounds like diols, polyols or hydroxy carboxylic acids.

Particles according to the invention have advantageous properties even if uncoated, but it is preferred if the particles are coated. Such a coating may for example contain alkali metal silicate having a molar ratio SiO₂:M₂O exceeding 3, one or more water soluble organic stabiliser as described herein, water soluble magnesium compounds such as magnesium sulfate, alkali metal salts of carbonate, bicarbonate or sulfate, or other environmental acceptable stabilisers, the different components being applied in one or several layers.

Suitably, the particles have an average diameter from about 50 to about 3000 µm, preferably from about 100 to about 1600 µm. The preferred density is from about 600 to about 1500 g/l, particularly from about 800 to about 1100 g/l. It has been found that a high density as well as a high average particle size improves the storage stability.

In most cases the particles suitably have a dissolution time in water at 20°C from about 2 to about 300 minutes, preferably from about 5 to about 120 minutes, most preferably from about 8 to about 30 minutes. Particles to be used in combination with peroxidase enzymes suitably have a dissolution time at 20°C from about 300 minutes, preferably from about 120 to about 300 minutes.

The invention also concerns a method for preparation of particles as described above comprising a step of adding to alkali metal percarbonate an alkali metal silicate having a molar ratio SiO₂:M₂O exceeding 3 but not exceeding 5. The method can comprise a step of adding alkali metal silicate having a molar ratio SiO₂:M₂O exceeding 3 by mixing it substantially uniformly with alkali metal percarbonate and optional additives such as water soluble organic stabilisers in a granulation step to obtain particles of a suitable size. The method can also comprise as step of coating alkali metal percarbonate particles with alkali metal silicate having a molar ratio SiO₂:M₂O exceeding 3 and other optional additives such as organic stabilisers. However, it is preferred not to premix the alkali metal silicate with any water soluble organic stabiliser before addition to the percarbonate.

Preferably, the method comprises at least a step of coating percarbonate particles with alkali metal silicate as described above.

Granulation may be performed by conventional methods well known among those skilled in the art, such as compacting, extruding, agglomeration in drum or disk, fluid-bed granulation, prilling or in different kinds of mixers. A coating step may be performed by spraying the particles with preferably aqueous solutions of the additives to be applied, for example in a drum or a fluid bed.

Regarding preferred silicates, organic stabilisers and other additives, as well as suitable amounts thereof, the above description of the particles according to the invention is referred to.

The invention further concerns use of the described alkali metal percarbonate particles as a bleaching agent in combination with enzymes, preferably in connection with washing of textiles or dishwashing. The washing water may be supplied with one or several kinds of enzymes and particles according to the invention which may be included in a detergent composition or be in the form of a separate bleaching powder. Preferably, washing water is supplied with particles in an amount so to obtain from about 0.001 to about 1 gram active oxygen per litre, which for example corresponds to from about 0.01 to about 6 grams sodium percarbonate. The amount of enzymes supplied is suitably from about 0.1 to about 10 wt%, most preferably from about 0.5 to about 5 wt%. Good results are achieved with all kinds of enzymes for use in detergents such as amylases, neutral and alkaline proteases, lipases, esterases, cellulases or peroxidases.

Finally, the invention concerns a composition for washing, dishwashing and/or bleaching containing particles according to the invention, for example in an amount from about 1 up to about almost 100 wt%, preferably from about 1 to 99.9 wt%, and preferably also enzymes as described above, for example in an amount from about 0.5 to about 10 wt%.

The composition may further contain an inert filler, and/or one or several substances active at washing. The substances active at washing may include detergent builders, surfactants, alkali generating substances, bleaching activators, enzymes, or any other substances commonly used in detergents. The detergent builder may for example be selected from phosphates such as tripolyphosphates, pyrophosphates or orthophosphates of alkali metals or ammonium, zeolites such as Zeolite A (e.g. Zeolite 4A), Zeolite B, Zeolite P, Zeolite X, or Zeolite HS, Zeolite MAP, silicates such crystalline layered disilicates (e.g. of the formula NaMSlₓ₊₁·yH₂O wherein M is sodium or hydrogen, x is a number from 1.9 to 4 and y is a number from 0 to 20), amorphous disilicates (e.g. Britesil™), polycarboxylates, citrates, carbonates, bicarbonates, sesquicarbonates, sulfates, borates or mixtures thereof. The surfactants are preferably selected from anionic surfactants, nonionic surfactants, soaps or mixtures thereof. Anionic surfactants may for example be selected from linear alkylbenzene sulfonates, secondary alkane sulfonates, alpha-sulfonated methyl fatty acid esters, alkylsulfates, alcohol-ethoxysulfates, alpha-olefine sulfonates, alkali metal sarcosinates or alkyl ester sulfonates. Nonionic surfactants may for example be selected from alkoxylated compounds such as fatty alcohols, alkylphenols and alkylamines or from alkyl polyglucosides or polyhydroxy fatty acid amides. Soaps may for example be selected from sodium or potassium salts of tallow. Also cationic surfactants such as quaternary ammonium compounds or imide azolinium salts, as well as amphoteric surfactants might be used. Alkali generating substances may for example be selected from carbonates, silicates, phosphates or mixtures thereof. The bleaching activators may for example be selected from N- or O-acylated compounds such as TAED, TAGU, SNOBS (sodium nonoyl benzene sulfonate), PAG (penta acetyl glucose) or diacylated diperoxy carboxylic acids. The filler may include any inert substance such as sodium sulfate. The composition may constitute a complete detergent or a bleaching powder to be added separately at washing.

A complete detergent for washing of textiles suitably contains from about 1 to about 40 wt%, preferably from about 5 to about 25 wt% of particles according to the invention. Further, the detergent suitably contains a detergent builder, for example from about 5 to about 50 wt%, surfactants, for example from about 5 to about 35 wt% and an alkali generating substance, for example from about 5 to about 20 wt%. Preferably, the detergent contains from about 5 to about 20 wt% of anionic surfactants, from about 2 to about 15 wt% of nonionic surfactants, and from about 0.1 to about 5 wt% of soaps. The detergent may also contain bleaching activators, for example from about 1 to about 10 wt%, enzymes, for example from about 0.5 to about 2.5 wt%, and fillers such as sodium sulfate, for example from about 5 to about 50 wt%. It is also possible to include chelating agents such as phosphonates, EDTA, NTA (nitrilo triacetic acid), iminodiacetic acid derivatives or EDDS (ethylenediamine-N,N-disuccinic acid, for example in an amount from about 0.1 to about 1 wt%. Additionally, the detergent may contain conventional components such as water glass, carboxy methyl cellulose, dispersants such as homo or copolymers of polycarboxylic acids, foam regulators, antioxidants, perfumes, colouring agents, optical brighteners and water (normally from about 3 to about 15 wt%). The composition may be in the form of free flowing particles, for example with a diameter from about 0.05 to about 3 mm, or in the form of tablets corresponding to a single dose for washing. The composition can be prepared with conventional methods such as dry mixing, agglomeration spray drying or tablet pressing. If the preparation involves spray drying, any heat sensible component such as particles comprising peroxy compounds, enzymes and perfumes should be added to the dried material.

A separate bleaching powder may comprise up to almost 100 wt% of particles containing alkali metal percarbonate according to the invention, but preferably the content is from about 5 to about 90 wt%. The bleaching powder may comprise only one peroxy compound or a mixture of particles containing different kinds of peroxy compounds. It is advantageous if a hydrogen peroxide generating substance such as percarbonate, for example from about 10 to about 75 wt%, is used in combination with a bleaching activator such as TAED or TAGU, for example from about 2 to about 25 wt%. Also other bleaching activators such as a diacylated dipercarboxylic acid may be used, for example in an amount from about 2 to about 25 wt%. A bleaching powder may also contain detergent builders, for example from about 5 to about 90 wt%, surfactants, for example up to about 10 wt%, enzymes, for example up to about 2 wt%, or fillers, for example from about 5 to about 90 wt%. A preferred bleaching powder consists essentially of from about 30 to about 75 wt% of particles containing percarbonate, from about 10 to about 25 wt% of a bleaching activator, the balance preferably substantially being detergent builders, fillers, surfactants, water or mixtures thereof.

A detergent for dishwashing may be in the form of a low alkaline detergent (pH of washing water intended to be about 10-11) suitably containing from about 2 to about 15 wt% of a bleaching agent comprising particles according to the invention, from about 5 to about 50 wt% of alkali metal disilicate, from 0 to about 40 wt% of alkali metal carbonate, from about 15 to about 50 wt% of builders such as sodium citrate and polycarboxylates or sodium tri polyphosphate (STPP), from about 0.5 to about 5 wt% of low foaming nonionic surfactants, from about 0.5 to about 5 wt% of enzymes and from about 1 to about 6 wt% of bleaching activators such as TAED. A dishwasher detergent may also be high alkaline (pH of washing water intended to be about 11-12) having a similar composition as the low alkaline detergent, the disilicate however being replaced with from about 20 to about 80 wt% of alkali metal metasilicate and the builder preferably substantially consisting of STPP.

The present invention makes it possible to achieve optimal effect both from the percarbonate bleach and the enzymes at washing. It is also possible to achieve high storage stability for percarbonate and enzymes in a detergent composition. It is particularly advantageous in combination with peroxidase enzymes, but also with other kinds of enzymes.

The invention will now be described through the following examples which, however, not are intended to limit the scope of the invention. If not otherwise stated, all contents and percentages refer to content and percent by weight based on the entire particle.

Example: Granulated sodium percarbonate particles with a diameter of about 315-1250 mm and consisting of 97.75 wt% sodium percarbonate, 1.5 wt% sodium glucoheptonate, 0.63 wt% sodium disilicate and 0.12 wt% magnesium sulfate were coated by spraying thereon an aqueous solution of sodium silicate having a molar ratio SiO₂:Na₂O of 3.3. The final particles contained 9 wt% of sodium silicate having a molar ratio SiO₂:Na₂O of 3.3 and 13 wt% of active oxygen. For comparison, particles were prepared in the same way except that the sodium silicate in the coating had a molar ratio SiO₂:Na₂O of 2.6. In order to test the bleaching efficiency of the percarbonate particles presoiled pieces of cloth were washed in a 3 kg washing machine at 40°C with 15.4 g percarbonate particles, 5 g TAED and 80 g enzyme containing standard detergent IEC-Z (Henkel) added to 10 litres of water. The standard detergent consisted of 9.7% linear alkyl benzenesulfonate (C_{average}11.5), 5.2% ethoxylated C₁₂₋₁₈alcohol (EO₇), 3.6% sodium-soap, 32.5% zeolite A, 13.0% sodium carbonate, 5.2% sodium salt of copolymerisate of acrylic- and maleic acid (CP₅), 3.9% sodium waterglass (ratio 3.3), 1.3% carboxy methyl cellulose, 0.3% EDTA, 0.3% optical brightener (stilbene type), 24.4% sodium sulfate, water and foam regulator, 0.6% enzyme prills (protease, activity 300.00). The following types of presoiled cloth were used: WFK 10C (cotton soiled with standard dirt), EMPA 111 (cotton soiled with blood), EMP 116 (cotton soiled with blood, milk and Indian ink) and EMPA 117 (cotton-polyester soiled with blood, milk and Indian ink). The brightness of each piece was determined prior to and after the washing with a reflectance meter at a wave-length of ... nm, whereupon the differences were transformed to percent washing effect which is shown in the table below.

| cloth | ratio 3.3 | ratio 2.6 |
|---|---|---|
| WFK 10C | 24% | 21% |
| EMPA 111 | 94% | 93% |
| EMPA 116 | 47% | 43% |
| EMPA 117 | 60% | 54% |

As shown in the table, the percarbonate with the higher molar ratio SiO₂:Na₂O in the coating gives a better washing effect.

## Claims

1. Alkali metal percarbonate particles having a content of active oxygen from 10 to about 15.3 wt%, **characterised** in that they comprise alkali metal silicate having a molar ratio SiO₂:M₂O, M being an alkali metal, exceeding 3 but not exceeding 5.

2. Particles as claimed in claim 1, wherein the particles contain from 0.5 to 30 wt% of alkali metal silicate having a molar ratio SiO₂:M₂O exceeding 3 but not exceeding 5.

3. Particles as claimed in any one of the claims 1-2, wherein the particles have a coating containing alkali metal silicate with a molar ratio SiO₂:M₂O exceeding 3 but not exceeding 5.

4. Particles as claimed in claim 3, wherein the alkali metal silicate with a molar ratio SiO₂:M₂O exceeding 3 but not exceeding 5 in the coating constitutes from about 1 to about 25 wt% of the total particle.

5. Particles as claimed in any one of the claims 1-4, wherein alkali metal silicate having a molar ratio SiO₂:M₂O exceeding 3 but not exceeding 5 is substantially uniformly mixed with the alkali metal percarbonate within the particles.

6. Particles as claimed in any one of the claims 1-5, wherein the molar ratio SiO₂:M₂O exceeds 3.2.

7. Particles as claimed in any one of the claims 1-6, wherein the content of active oxygen is from 13 to about 15.3 wt%.

8. Particles as claimed in any one of the claims 1-7, wherein the particles comprise a water soluble organic stabiliser.

9. Particles as claimed in claim 8, wherein the organic stabiliser is selected from compounds of the formula
R₁CₙHₘ(OH)ₚ(COOH)_{q}R₂
in which n = 1-8, m = 1-2n, p = 0-n, q = 0-2 and at least one of R₁ and R₂ is COOH and the other one is OH or COOH; or salts thereof.

10. Particles as claimed in claim 9, wherein the organic stabiliser is selected from hydroxy carboxylic acids of the formula:
R'CₙHₘ(OH)ₙCOOH
in which R' is CH₂OH or COOH, n is 2-6, and m is 0-n; or salts thereof.

11. Particles as claimed in claim 9, wherein the organic stabiliser is selected from dicarboxylic acids having 5 to 10 carbon atoms or salts thereof.

12. Method for preparation of particles according to any of the claims 1-11, comprising a step of adding to alkali metal percarbonate an alkali metal silicate having a molar ratio SiO₂:M₂O exceeding 3 but not exceeding 5.

13. Use of particles according to anyone of the claims 1-11 as a bleaching agent in combination with enzymes.

14. Composition for washing, dishwashing and/or bleaching containing particles according to any one of the claims 1-11.
